# EUROPEAN PATENT APPLICATION

(11) **EP 4 657 354 A1**
(43) Date of publication of application: **03.12.2025**
(21) Application number: 24756978.3
(22) Date of filing: 15.02.2024
(51) Int. Cl.: G06Q 30/0207

(54) **POINT RALLY MANAGEMENT PROGRAM AND POINT RALLY MANAGEMENT SYSTEM**

(30) Priority: 17.02.2023 JP 2023023774
(71) Applicant: Frantrec Inc., Tokyo 105-0014 (JP)
(72) Inventor: TSUDA, Shutaro, Tokyo 105-0014 (JP)
(74) Representative: Hasegawa, Kan
(86) International application number: PCT/JP2024/005381
(87) International publication number: WO 2024/172138

(57) **Abstract**

Provided are a point rally management program and a point rally management system enabling a point rally to be continuously held.

A rally management server 10 functions as an account management unit 11AC, a rally environment management unit 11EV, a version management unit 11VR, a rally provision unit 11EX, a check-in determination unit 11CH determining whether a player performs a valid check-in at a predetermined spot, a check-in history management unit 11HS managing a check-in history, an achievement condition determination unit 11GJ determining whether to satisfy a predetermined achievement condition of a game in which the player participates, a benefit provision unit 11RW providing a predetermined benefit to the player who satisfies the achievement condition, a ranking management unit 11RK managing a ranking relevant to a point rally, and a control unit 11CR controlling each device.

## Description

### TECHNICAL FIELD

The present invention relates to a point rally management program and a point rally management system.

### BACKGROUND ART

A point rally is known in which information of a destination to visit (a spot) is provided to a participant (a player), and a predetermined content or benefit is given to the participant, in accordance with the current position of the participant, the progress status of an event, and the like.

As a system managing the point rally, a display panel for a guide map is installed at various sightseeing spots (spots) and an infrared communication unit is mounted on the display panel, and when the participant visits each of the sightseeing spots, a coupon image, a point image, or the like is displayed on the display panel for a guide map that is installed in each of the sightseeing spots by using an infrared communication function of a mobile phone carried by the participant and a coupon or point information is provided to the mobile phone of the participant via infrared communication (for example, Patent Document 1).

### CITATION LIST

### PATENT DOCUMENT

Patent Document 1: JP 2011-100430 A

### DISCLOSURE OF THE INVENTION

### PROBLEM TO BE SOLVED BY THE INVENTION

However, the point rally is often used not only for the promotion of a predetermined product or service, but also for town revitalization or the branding of local businesses. In a case where the point rally is used for such purposes, it is desirable that the point rally is continuously performed.

In a case where the point rally is continuously performed, it is also considered that the spot moves or disappears during the point rally. In addition, a new spot may emerge during the point rally. In a case where the spot moves, disappears, or emerges during the point rally, the contents of the point rally are required to follow the change.

However, in the point rally management system of the related art, it is necessary to install the display panel for a guide map and the infrared communication unit at each of the spots. Therefore, every time when the spot moves, disappears, or emerges during the point rally, it is necessary to relocate, retrieve, or newly install the display panel for a guide map and the infrared communication unit, and thus, it is practically difficult to continuously perform the point rally.

The invention has been made in consideration of such circumstances, and is to provide a point rally management program and a point rally management system enabling a point rally to be continuously held.

### MEANS FOR SOLVING PROBLEM

A point rally management program of the invention causes a computer to execute: when defining identification information of a player as a player ID, identification information of a spot as a spot ID, a history that the player checks in the spot as a check-in history, identification information of a game including a plurality of the spots as a game ID, and identification information of a series including a plurality of the games as a series ID, a check-in determination step of determining whether check-in determined information associated with the player ID and the spot ID satisfies a check-in condition of the spot ID; a check-in history storage step of storing the check-in history associated with the player ID and the spot ID in a storage device when the check-in determination step is performed; a game achievement determination step of determining the check-in history stored in the storage device satisfies a predetermined game achievement condition; and a series achievement determination step of reading an achievement determination result of the game by the game achievement determination step from the storage device and determining whether the check-in history associated with the series ID associated with the game ID satisfies a predetermined series achievement condition.

It is preferable that the game ID is associated with a creator ID indicating a creator of the game, and the program causes the computer to further execute: a calculation step of reading the check-in history information from the storage device and calculating the number of check-ins of the spot, the number of players who have performed the check-in, the number of plays of the game, or the number of people playing the game; and a ranking display step of giving a result of the calculation to the spot ID or the game ID to be stored in the storage device and displaying a ranking of the creator ID relevant to the result of the calculation. In addition, it is preferable that the player ID the check-in determination step is associated with the game ID, and in the game achievement determination step, the determination is performed on the basis of the check-in history after the player ID is associated with the game ID and the check-in history before the player ID is associated with the game ID. Further, it is preferable that the program causes the computer to further execute, when defining a version of the game as a game version, a version application step of associating the game version that is updated with the player ID in the storage device, in which when the game version of the game is updated, in the version application step, the game version associated with the player ID not participating in the game is overwritten with the game version after update, and in the game version associated with the player ID participating in the game, at least one of the game version before update and the game version after update is associated with the player ID, on the basis of a request of the player.

A point rally management program of the invention causes a computer to execute: when identification information of a player as a player ID, identification information of a spot as a spot ID, a history that the player checks in the spot a check-in history, and identification information of a game including a plurality of the spots as a game ID, a check-in determination step of determining whether check-in determined information associated with the player ID and the spot ID satisfies a check-in condition of the spot ID; a check-in history storage step of storing the check-in history associated with the player ID and the spot ID in a storage device when the check-in determination step is performed; and a game achievement determination step of determining the check-in history that is stored in the storage device and is associated with the game ID and the player ID satisfies a predetermined game achievement condition, in which the player ID in the check-in determination step is not associated with the game ID, and in the game achievement determination step, the determination is performed on the basis of the check-in history after the player ID is associated with the game ID and the check-in history before the player ID is associated with the game ID.

It is preferable that the program causes the computer to further execute, when registering the game in the storage device, a past check-in history application determination step of receiving whether to set the check-in history relevant to the player ID before being registered in association with the game ID as a determination target of the game achievement determination step for the game ID, in which the check-in history includes a check-in time, in the player ID, a game participation time representing a time when the player participates in the game is associated with each of the game IDs, when the check-in time is earlier than the game participation time, the check-in history is the check-in history before being registered in association with the game ID, and when the check-in time is later than the game participation time, the check-in history is the check-in history after being registered in association with the game ID. In addition, it is preferable that the program causes the computer to further execute, when guiding the player not participating in the game to the game, a guide step of displaying a degree of progress of the game from the check-in history and the game achievement condition of the game, in which the degree of progress of the game is generated on the basis of the check-in history of the player stored in the storage device before the game is registered.

In addition, a point rally management program of the invention causes a computer to execute, when defining identification information of a player as a player ID, identification information of a spot as a spot ID, a history that the player checks in the spot as a check-in history, identification information of a game including a plurality of the spots as a game ID, and a version of the game as a game version, a version application step of associating the game version that is updated with the player ID in a storage device, in which when the game version of the game is updated, in the version application step, the game version associated with the player ID not participating in the game is overwritten with the game version after update, and in the game version associated with the player ID participating in the game, at least one of the game version before update and the game version after update is associated with the player ID, on the basis of a request of the player.

It is preferable that in the version application step, the game version after update is added as the game version associated with the player ID participating in the game. In addition, it is preferable that in the version application step, the game version associated with the player ID participating in the game is updated to the game version according to the request of the player, among at least one of the game version before update and the game version after update. Further, it is preferable that the program causes the computer to further execute, when the game version of the game is updated, an application version determination step of determining whether the player participates in the game. In addition, it is preferable that when the game version of the game is updated, in the version application step, an instruction to select any one of the game version after update and the game version before update is output to the player who participated in the game before the game version of the game is updated.

It is preferable that the program causes the computer to further execute a version association step of associating the game version that is updated with the game ID in the storage device, in which when the game version of the game is updated, and the game version associated with the game ID is added, in the version association step, a game achievement condition associated with the game ID is added in accordance with the added game version. In addition, it is preferable that in the version association step, when any one of deletion, change, and addition of the spot belonging to the game is performed, the game version after update is added to the spot ID belonging to the game. Further, it is preferable that when the deletion or the change of the spot is performed, a check-in determination condition of the spot relevant to the game version before update is set to position information of the spot ID that is deleted or position information of the spot ID before change.

A point rally management system of the invention, includes: a storage device storing identification information of a player as a player ID, identification information of a spot as a spot ID, a history that the player checks in the spot as a check-in history, identification information of a game including a plurality of the spots as a game ID, and identification information of a series including a plurality of the games as a series ID; a check-in determination unit determining whether check-in determined information associated with the player ID and the spot ID satisfies a check-in condition of the spot ID; a check-in history storage unit storing the check-in history associated with the player ID and the spot ID in the storage device; a game achievement determination step of determining whether the check-in history stored in the storage device satisfies a predetermined game achievement condition; and a series achievement determination unit reading an achievement determination result of the game by the game achievement determination unit from the storage device and determining whether the check-in history associated with the series ID associated with the game ID satisfies a predetermined series achievement condition.

A point rally management system of the invention, includes: a storage device storing identification information of a player as a player ID, identification information of a spot as a spot ID, a history that the player checks in the spot as a check-in history, and identification information of a game including a plurality of the spots as a game ID; a check-in determination unit determining whether check-in determined information associated with the player ID and the spot ID satisfies a check-in condition of the spot ID; a check-in history storage unit storing the check-in history associated with the player ID and the spot ID in the storage device; and a game achievement determination unit determining whether the check-in history that is stored in the storage device and is associated with the game ID and the player ID satisfies a predetermined game achievement condition, in which the player ID to be a determination target of the check-in determination unit includes a player ID that is not associated with the game ID, and the game achievement determination unit performs the determination, on the basis of the check-in history after the player ID is associated with the game ID and the check-in history before the player ID is associated with the game ID.

A point rally management system of the invention, includes: a storage device storing a player ID that is identification information of a player, a spot ID that is identification information of a spot, a check-in history that is a history that the player checks in the spot, a game ID that is identification information of a game including a plurality of the spots, and a game version that is a version of the game; and a version application unit associating the game version that is updated with the player ID in the storage device, in which when the game version of the game is updated, the version application unit overwrites the game version associated with the player ID not participating in the game of the game version after update, and associates at least one of the game version before update and the game version after update with the player ID, on the basis of a request of the player, in the game version associated with the player ID participating in the game.

### EFFECT OF THE INVENTION

According to the invention, it is possible to provide the point rally management program and the point rally management system enabling the point rally to be held for a long period of time.

### BRIEF DESCRIPTION OF DRAWINGS

Fig. 1 is an explanatory diagram illustrating an outline of a point rally management system;
Fig. 2(A) is a hardware schematic view of a rally management server, and Fig. 2(B) is a hardware schematic view of a rally player terminal;
Fig. 3 is a function block diagram of the rally management server;
Fig. 4(A) is an explanatory diagram illustrating an outline of a creator DB, and Fig. 4(B) is an explanatory diagram illustrating an outline of a player DB;
Fig. 5(A) is an explanatory diagram illustrating an outline of a spot DB, Fig. 5(B) is an explanatory diagram illustrating an outline of a game DB, and Fig. 5(C) is an explanatory diagram illustrating an outline of a series DB;
Fig. 6(A) is an explanatory diagram illustrating a relationship in a spot, a game, and a series before version upgrade, and Fig. 6(B) is an explanatory diagram illustrating a relationship in the spot, the game, and the series after version upgrade;
Fig. 7 is an explanatory diagram illustrating an outline of a check-in history DB;
Fig. 8 is a flowchart illustrating an outline of a point rally management method (a game play part);
Fig. 9 is a flowchart illustrating an outline of a point rally management method (a version upgrade part);
Fig. 10(A) is a function block diagram of the rally management server, and Fig. 10(B) is a function block diagram of the rally player terminal;
Fig. 11 is a flowchart illustrating an outline of a point rally management method;
Fig. 12 is a flowchart illustrating an outline of a point rally management method;
Fig. 13 is a flowchart illustrating an outline of a point rally management method; and
Fig. 14 is an explanatory diagram illustrating an outline of a progress rate of the game.

### BEST MODE(S) FOR CARRYING OUT THE INVENTION

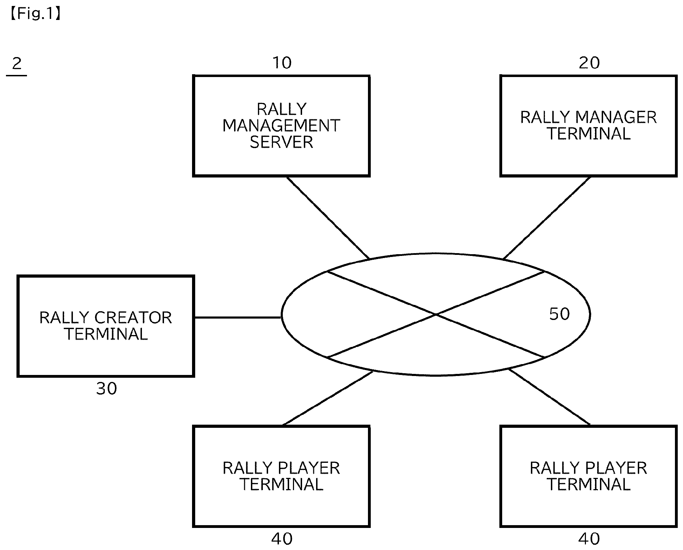

As illustrated in Fig. 1, a point rally management system 2 includes a rally management server 10, a rally manager terminal 20, a rally creator terminal 30, a rally player terminal 40, and a communication line 50 enabling the rally management server 10 and each of the terminals 20 to 40 to communicate with each other.

The rally management server 10 performs information processing required to execute and manage a point rally including a plurality of spots, receives requests from each of the terminals 20 to 40, performs predetermined arithmetic, and transmits a predetermined arithmetic result to each of the terminals 20 to 40. The rally manager terminal 20 is to perform management such as the registration or the change of the point rally, and the operation of the point rally, and is manipulated by a manager. The rally creator terminal 30 is to perform the registration or the change of the point rally, and is manipulated by a creator of the point rally. The rally player terminal 40 is to participate in and play the point rally, and is manipulated by a player of the point rally.

As the rally manager terminal 20, a desktop personal computer or a mobile terminal (a laptop personal computer, a mobile phone, a tablet PC, a smart phone, and the like) is used. As the rally creator terminal 30 or the rally player terminal 40, a mobile terminal is used.

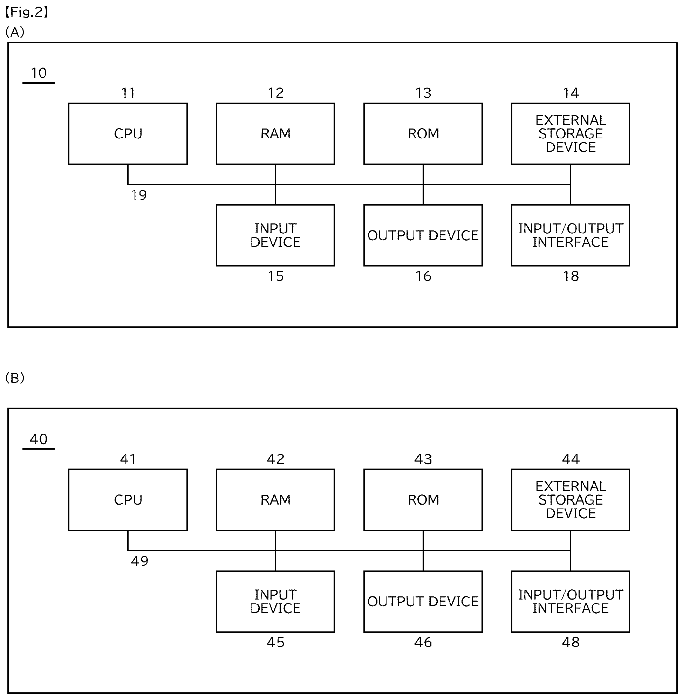

As illustrated in Fig. 2(A), the rally management server 10 includes a CPU 11, a RAM 12, a ROM 13, an external storage device 14, an input device 15, an output device 16, an input/output interface 18, and a bus 19.

The CPU 11 is a so-called central processing unit, and attains various services of the rally management server 10 by executing various programs. The RAM 12 is a so-called random access memory (RAM), and is used as a working area of the CPU 11. The ROM 13 is a so-called read only memory (ROM), and stores the basic OS or various programs (for example, a point rally management program) executed by the CPU 11.

The external storage device 14 stores arithmetic results of various programs, and the like, and includes a built-in storage device (for example, a hard disk drive) and a removable storage device (for example, a memory card and the like). Note that the external storage device 14 may be connected via a communication line, as with a network attached storage (NAS).

The input device 15 is an input key, a keyboard, or a mouse, and inputs various types of information. The output device 16 is a display, and displays various operating states.

The input/output interface 18 enables the communication of the communication line. The bus 19 is provided as wiring that integrally connects the CPU 11, the RAM 12, the ROM 13, the input device 15, the output device 16, the input/output interface 18, and the like to perform communication.

Next, the rally player terminal 40 and the rally creator terminal 30 will be described, the same names will be applied to the common parts, and the detailed description will be made only for different parts.

As illustrated in Fig. 2(B), the rally player terminal 40 includes a CPU 41, a RAM 42, a ROM 43, an external storage device 44, an input device 45, an output device 46, an input/output interface 48, and a bus 49. The input device 45 includes an input key, a touch panel, a camera, a GPS sensor unit, an acceleration sensor, and the like. In addition, even though it is not illustrated, the rally creator terminal 30 includes a CPU, a RAM, a ROM, an external storage device, an input device, an output device, an input/output interface, and a bus, and each part is the same as that in the rally player terminal 40.

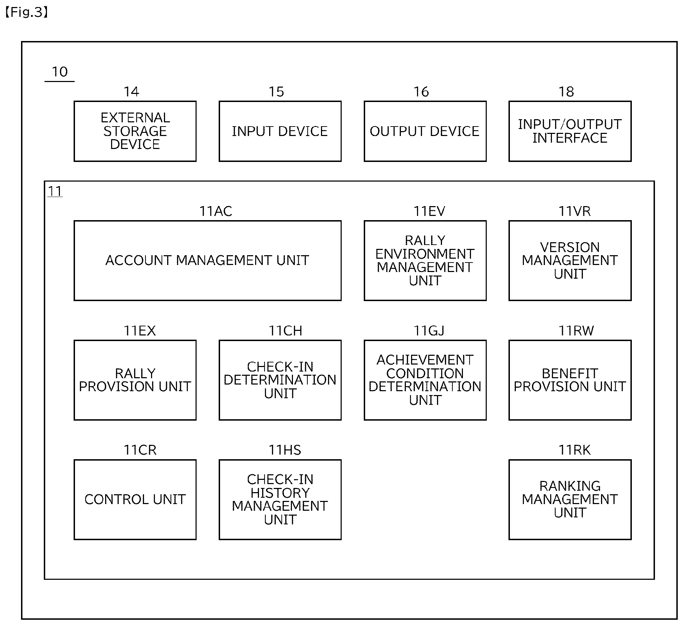

In a case where the basic OS or various programs stored in the ROM 13 are executed by the CPU 11, as illustrated in Fig. 3, the rally management server 10 functions as the external storage device 14 in which various types of information are stored and each database (DB) is constructed, the input device 15, the output device 16, the input/output interface 18, an account management unit 11AC, a rally environment management unit 11EV, a version management unit 11VR, a rally provision unit 11EX providing the point rally to each of the players, a check-in determination unit 11CH determining whether the player performs valid check-in at a predetermined spot, a check-in history management unit 11HS managing a check-in history, an achievement condition determination unit 11GJ determining whether to satisfy a predetermined achievement condition of a game in which the player participates, a benefit provision unit 11RW providing a predetermined benefit to the player who satisfies the achievement condition, a ranking management unit 11RK managing a ranking relevant to the point rally, and a control unit 11CR controlling each device.

Hereinafter, the details of each unit in the CPU 11 will be described.

The account management unit 11AC manages the accounts of the manager, the creator, the player, and the like, and is operated in accordance with the request from each of the terminals 20 to 40. The account management unit 11AC includes a manager registration processing unit, a game creator registration processing unit, and a player registration processing unit. In the manager registration processing unit, predetermined information is recorded in a manager DB (not illustrated) constructed in the external storage device 14.

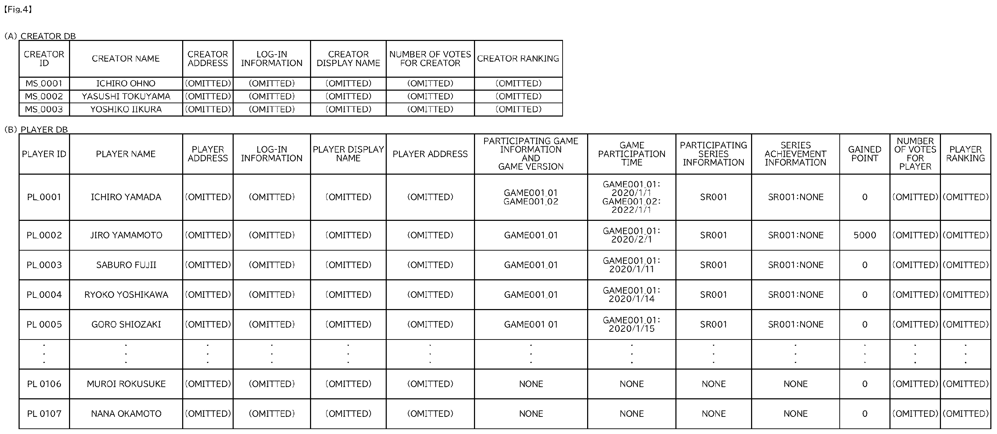

In the game creator registration processing unit, predetermined information is recorded in a game creator DB (Fig. 4(A)) constructed in the external storage device 14. In the game creator DB, a creator ID that is an identifier of the creator, a creator name, a creator address, log-in information (for example, an ID, a password, or the like required for log-in) for the creator to log in the point rally management system 2, contact information (such as an SNS or an e-mail address), a creator display name displayed on the point rally management system, the number of votes for the creator, and a creator ranking are associated with each other.

In a case where a request for game creator registration is transmitted from the rally creator terminal 30, the game creator registration processing unit requests the rally creator terminal 30 to transmit information required for the game creator registration (such as the creator name, the creator address, and the log-in information). In a case where the information required for the game creator registration is received from the rally creator terminal 30, the game creator registration processing unit registers the information required for the game creator registration in association with a new creator ID in the game creator DB.

In the player registration processing unit, predetermined information is recorded in a player DB (Fig. 4(B)) constructed in the external storage device 14. In the player DB, a player ID that is an identifier of the player, a player name, a player address, log-in information (for example, an ID, a password, or the like required for log-in) for the player to log in the point rally management system 2, contact information (such as an SNS or an e-mail address), a player display name displayed on the point rally management system, participating game information (the ID of the game and the version of the game), a game participation time, game achievement information, participating series information, series achievement information, a gained point, the number of votes for the player, and a player ranking are associated with each other. Note that the gained point may be omitted. In addition, the game participation time is stored for each version of the game.

In a case where a request for player registration is transmitted from the rally player terminal 40, the player registration processing unit requests the rally player terminal 40 to transmit information required for the player registration (such as the player name, the player address, and the log-in information). In a case where the information required for the player registration is received from the rally player terminal 40, the player registration processing unit registers the information required for the player registration in association with a new player ID in the player DB.

The rally environment management unit 11EV manages the environment of the point rally, and is operated in accordance with the request from the rally manager terminal 20 or the rally creator terminal 30. The rally environment management unit 11EV includes a spot registration change unit, a game registration change unit, and a series registration change unit.

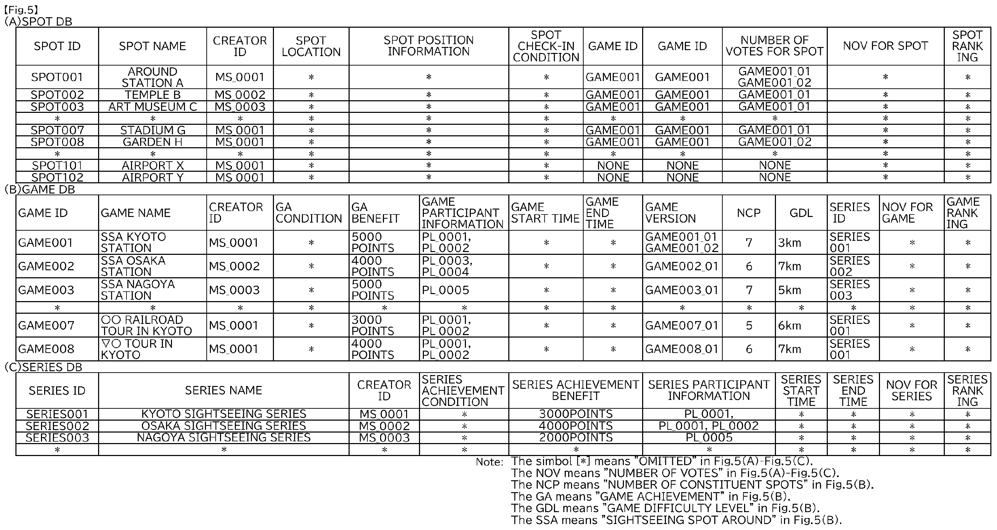

The spot registration change unit reads a spot DB (Fig. 5(A)) in which various types of information relevant to the spot (a place to visit) that is the constituent of the rally point are recorded, and performs suitable necessary processing such as addition, change, or deletion.

In the spot DB, a spot ID that is an identifier of the spot, a spot name, the creator ID representing the creator who sets the spot, a spot location (for example, the name of a municipality, a street number, and the like), spot position information (for example, GPS coordinates and the like), a spot check-in condition, spot status indicating whether the spot is currently valid, the game ID that is an identifier of the game to which the spot belongs, the version of the game applied to the spot, the number of votes for the spot, and a spot ranking are associated with each other.

Note that a predetermined spot may simultaneously belong to different games, or the same spots may not be allowed to simultaneously belong to a plurality of games.

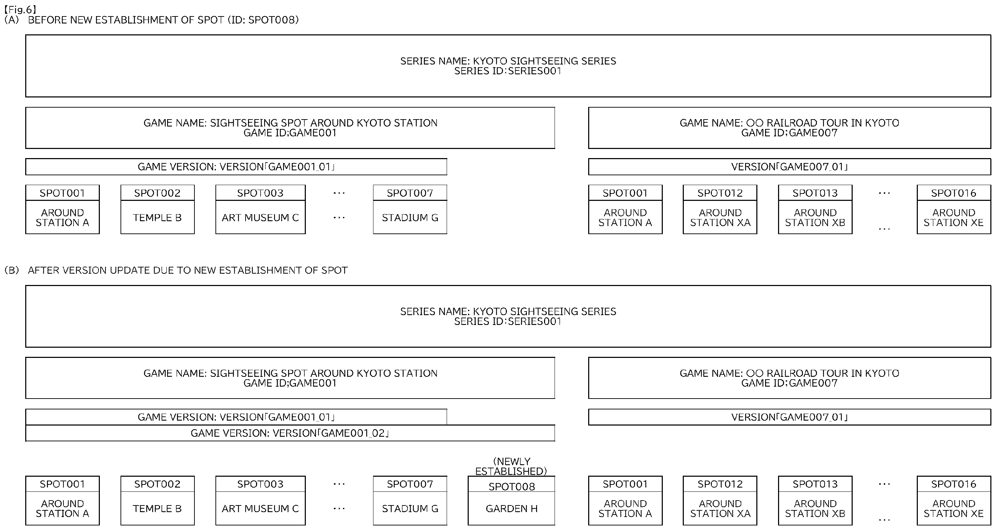

The game registration change unit reads a game DB (Fig. 5(B)) in which various types of information relevant to the game (Fig. 6) including the plurality of spots are recorded, and performs suitable necessary processing such as addition, change, or deletion.

In the game DB, the game ID that is the identifier of the game, a game name, the creator ID indicating the creator of the game, the number of constituent spots representing the number of spots constituting the game, a game difficulty level indicating the difficulty level of the game, a game version indicating the version of the game, a game achievement condition indicating the achievement condition of the game, a game achievement benefit given to the player who satisfies the game achievement condition, game participant information indicating the player ID participating in the game, a game start time indicating the start time of the game, a game end time indicating the end time of the game, a series ID indicating an identifier of a series to which the game belongs, the number of votes for the game, and a game ranking are associated with each other.

In a case where a request for new game registration transmitted from the rally creator terminal 30 is received, the game registration change unit requests the rally creator terminal 30 to transmit information required for the game registration (such as the game name, the number of constituent spots, detailed information of the constituent spot, the game achievement condition, the game achievement benefit, the game start time, and the game end time). In a case where the information required for the game registration is received from the rally creator terminal 30, the game registration change unit registers the information required for the game registration in association with the game ID, the creator ID, or the like in the game DB. In addition, the game registration change unit associates the newly registered game ID with "01", as the version of the game.

Note that the information required for the game registration may include the series ID. In this case, when the information required for the game registration is received from the rally creator terminal 30, the series registration change unit determines whether the series ID in the information required for the game registration is a series that is already registered in a series DB. In a case where it is determined that the series ID is already registered in the series DB, the game registration change unit associates the series ID and the game ID with the game DB. On the other hand, in a case where it is determined that the series ID is not registered in the series DB, the series registration change unit associates information required for series registration (described below) with the series ID, the creator ID, or the like, and the game registration change unit associates the series ID and the game ID with the game DB.

Here, the version of the game may be "GAME001_01" in which the game ID (for example, "GAME001") of the game is combined with a version number (for example, "01" or the like) by "_", or may be only the version number "01". The spot registration change unit associates the spots (spot IDs "SPOT001" to "SPOT007") belonging to the game with the game ID "GAME001", in the spot DB. Then, when the spots (the spot IDs "SPOT001" to "SPOT007") are associated with the game ID "GAME001", for the game version of the existing spots (the spot IDs "SPOT001" to "SPOT007"), the spot registration change unit sets "GAME001_01" indicating the version "01" of "GAME001" as the game version of the spot IDs "SPOT001" to "SPOT007".

In addition, the game registration change unit reads the spot ID associated with a predetermined game ID in the spot DB, and calculates a distance between the spots, on the basis of position information of each of the spots. The distance between the spots may be a sum of the shortest distances between the spots in a predetermined tour route. The game registration change unit associates the calculated distance between the spots with the game ID as the game difficulty level, in the game DB.

The series registration change unit reads the series DB (Fig. 5(C)) in which various types of information relevant to the series (Fig. 6) including the plurality of games are recorded, and performs suitable necessary processing such as addition, change, or deletion.

In the series DB, the series ID that is the identifier of the series, a series name, the creator ID indicating the creator of the series, a series achievement condition indicating the achievement condition of the series, a series achievement benefit given to the player who satisfies the series achievement condition, series participant information indicating the player ID participating in the series, a series start time indicating the start time of the series, a series end time indicating the end time of the series, the number of votes for the series, and a series ranking are associated with each other.

In a case where a request for new series registration is transmitted from the rally creator terminal 30, the series registration change unit requests the rally creator terminal 30 to transmit information required for the series registration (such as the series name, the series achievement condition, the series achievement benefit, the series start time, and the series end time). In a case where the information required for the series registration is received from the rally creator terminal 30, the series registration change unit registers the information required for the series registration in association with the series ID, the creator ID, or the like in the game DB.

The version management unit 11VR manages the version update of the game. In a case where the addition, the change, the deletion, or the like of the spot that is the constituent of the game is performed, the version management unit 11VR reads the version of the game from the game DB, and adds a new version as the game version associated with the game ID.

The rally provision unit 11EX provides information required to guide the point rally and play the point rally to the rally player terminal 40. The rally provision unit 11EX transmits information relevant to the game or the series to the rally player terminal 40, with reference to the player DB. In this case, the information transmitted to the rally player terminal 40 includes each ID relevant to the game or the series, the number of spots, the game difficulty level, the creator display name, the achievement condition, the achievement benefit, and the like.

In a case where there is an application for participating in the game from the rally player terminal 40, the player registration processing unit associates the participating game information relevant to the game with the player ID. In addition, in a case where there is an application for participating in the series from the rally player terminal 40, the player registration processing unit associates the series ID of the series and the participating game information relevant to the game belonging to the series with the player ID.

When the player desires to participate in the game, the rally provision unit 11EX provides the information of the game relevant to the latest game version to the player. Here, when the version of a predetermined game is upgraded, the rally provision unit 11EX enquires of the player who already participates in the game about the version desired to apply. In the enquiry about the version desired to apply, the rally management server 10 transmits information relevant to the existing version and the new version of the game to the rally player terminal 40, and enquires about which play of the existing version and the new version of the game the player desires to apply. In a case where the rally management server 10 receives a request for the version of the game that is desired to apply from the rally player terminal 40, the player registration processing unit associates the player ID according to the request with the game version according to the request, with reference to the player DB. The rally provision unit 11EX provides the game of the requested version to the rally player terminal 40.

Here, in a case where the game version according to the request is the new version, the new game version may be added in addition to the old game version, as the game version associated with the player ID according to the request, or the new game version may be overwritten as the game version associated with the player ID according to the request. In addition, in a case where the game version according to the request is the old version, the old game version may remain the same, as the game version associated with the player ID according to the request, or the new game version may be added as the game version associated with the player ID according to the request, in addition to the old game version, and then, the old game version may be continuously played.

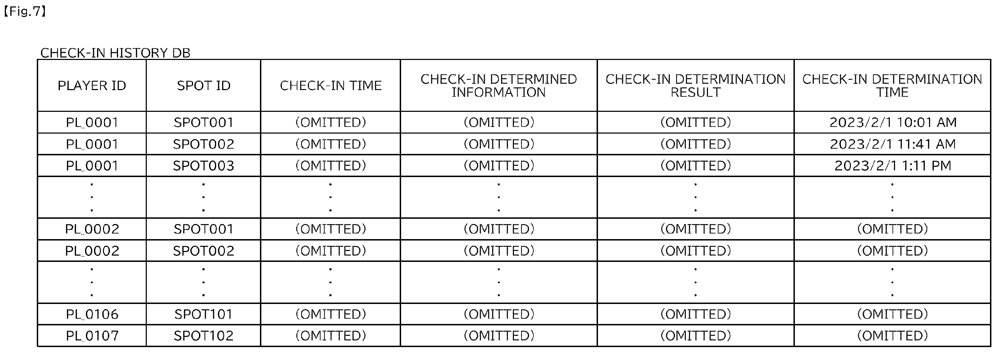

The check-in history management unit 11HS records the check-in history relevant to the player, and performs read, addition, change, deletion, or the like on a check-in history DB (Fig. 7).

In the check-in history DB, the check-in history is stored. In the check-in history, the player ID that is the identifier of the player requesting check-in determination, the spot ID that is the identifier of the spot to be a check-in determination target, a check-in time representing a time when the check-in determination is requested, check-in determined information, a check-in determination result, and a check-in determination time are associated with each other. Note that the check-in time may be a time when the check-in is performed, or may be a time when the check-in determination is performed.

The check-in determination unit 11CH determines whether the player performs the valid check-in at the spot, and reads the spot check-in condition associated with the spot ID when the request for the check-in determination including player ID of the player and the spot ID of the spot is received.

After that, the check-in determination unit 11CH requests the rally player terminal 40 to transmit the check-in determined information, receives the check-in determined information from the rally player terminal 40, and then, determines whether the check-in determined information satisfies the spot check-in condition. After the determination of the check-in determination unit 11CH, the check-in history management unit 11HS writes the request for the check-in determination, the check-in determined information, and the check-in determination result in the check-in history DB.

Here, in a case where the spot check-in condition is "the position information transmitted from the rally player terminal 40 being within a radius r meters from the spot position information", the check-in determined information is "the position information of the rally player terminal 40". In addition, in a case where the spot check-in condition is "acquiring a predetermined two-dimensional code associated with the spot", the check-in determined information is the two-dimensional code associated with the spot. Note that the spot check-in condition is not limited to the two-dimensional code, and may be a barcode, a keyword, a picture, or the like.

The achievement condition determination unit 11GJ includes a game achievement determination unit and a series achievement determination unit.

The game achievement determination unit determines whether to satisfy the achievement condition of the game in which player participates, and performs the determination when satisfying a predetermined condition (for example, the valid check-in is determined by the check-in determination unit 11CH). In a case where the valid check-in is determined by the check-in determination unit 11CH, the game achievement determination unit reads the player ID, the spot ID, and the like from information relevant to the check-in, and then, reads the game achievement condition (for example, the valid check-in is performed at all the spots belonging to the game) from the game ID and the game version associated with the player ID and the spot ID. Further, the game achievement determination unit extracts various types of information associated with the player ID from the check-in history DB, and determines whether the extracted information satisfies the game achievement condition. In a case where the extracted information satisfies the game achievement condition, the player registration processing unit rewrites the game achievement information associated with the player ID to "present" from "absent (the initial value)", in the player DB. Note that in a case where there are a plurality of game versions of the game, it is preferable that the game achievement information is associated with each of the game versions.

Note that the game achievement determination unit reads the player ID, the spot ID, and the like from the information relevant to the check-in, and then, reads the game achievement condition (for example, the valid check-in is performed at all the spots belonging to the game) from the game ID and the game version associated with the player ID and the spot ID, but the invention is not limited thereto. The game achievement determination unit may read the player ID, the spot ID, and the like from the information relevant to the check-in, and then, may not determine whether to satisfy the game achievement condition in a case where the game ID associated with the player ID and the spot ID is not found.

When the game achievement determination unit determines that the game achievement condition is satisfied, the series achievement determination unit reads information relevant to the game achievement condition (the player ID, the game ID, and the like) to the series ID and the series achievement condition (for example, the achievement conditions all the games belonging to the series are satisfied) from the series DB, and reads the game achievement information associated with the player ID from the player DB. Next, the series achievement determination unit determines whether the game achievement information satisfies the series achievement condition. In a case where it is determined that the game achievement information satisfies the series achievement condition, the player registration processing unit rewrites the series achievement information associated with the player ID to "present" from "absent (the initial value)", in the player DB.

When it is determined that the game achievement condition or the series achievement condition is achieved (for example, when the game achievement information, the series achievement information, or the like is written in a predetermined DB), the benefit provision unit 11RW associates the achievement benefit associated with the achievement condition with the player ID, in the player DB, and transmits the fact that the achievement benefit is given to the player to the rally player terminal 40 associated with the player ID. The achievement benefit includes a gained point dedicated to the point rally management system, and the like. Note that the gained point may be associated with obtained factors (such as the game ID and the series ID).

The ranking management unit 11RK reads the player DB, and extracts information relevant to the player with a higher gained point, under a predetermined condition. In addition, the ranking management unit 11RK transmits the information of the player ID with a higher gained point to the rally player terminal 40 at a predetermined timing, under a predetermined condition.

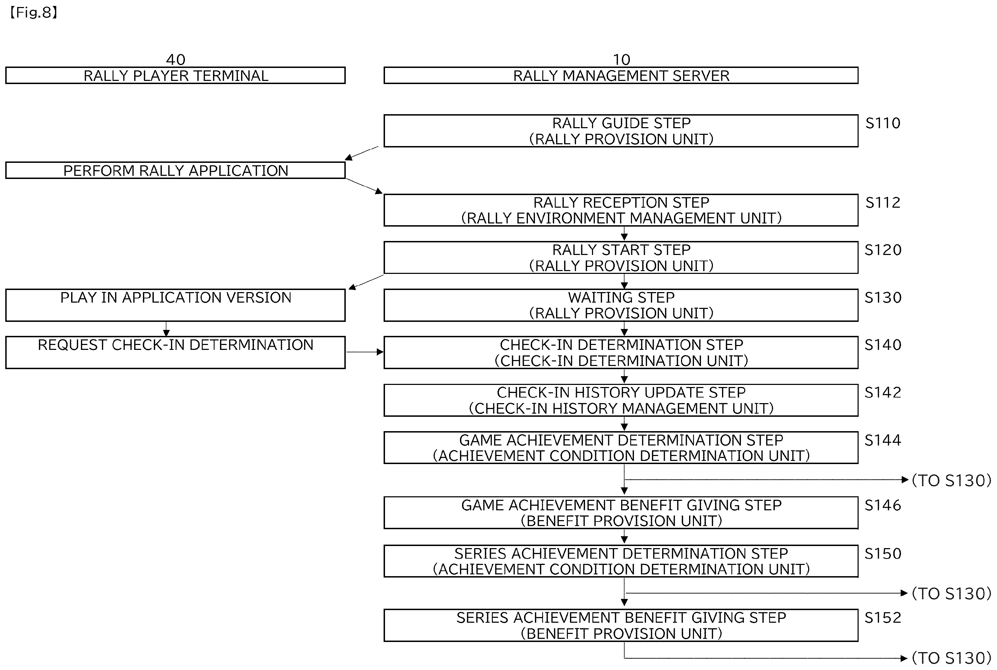

Next, a point rally management method using the point rally management system 2 will be described by using Figs. 6 and 8.

### (Rally Guide Step)

The rally provision unit 11EX transmits a predetermined game or series to the rally player terminal 40, with reference to the game DB and the series DB (S110). In this case, only information relevant to an unplayed game or the like may be transmitted to the player who has participated in several games or the like. Note that the rally provision unit 11EX transmits the predetermined game or series to the player ID registered in the player DB, with reference to the game DB and the series DB, and the information transmitted to a predetermined player ID may be browsed via the rally player terminal 40 (S110).

### (Rally Reception Step)

When the rally management server 10 receives an application request for participation in the game from the rally player terminal 40, the game registration change unit associates information included in the application request for participation (for example, the game ID relevant to the game) with the player ID, in the game DB, and the player registration processing unit associates the participating game information or the game achievement information with the player ID, in the player DB (S112). Similarly, when the rally management server 10 receives an application request for participation in the series from the rally player terminal 40, the series registration change unit associates information included in the application request for participation (for example, the series ID relevant to the series) with the player ID, in the series DB, and the player registration processing unit associates the series ID with the player ID, in the player DB (S112).

### (Rally Start Step)

After the rally reception step, the rally provision unit 11EX transmits various types of information relevant to the game or the series according to the application request for participation, and a progress status for each rally to the rally player terminal 40, on the basis of the request from the rally player terminal 40, with reference to the game DB, the series DB, or the check-in history DB (S120). The rally player makes a game plan for the next spot via the rally player terminal 40, with reference to information relevant to the games in which the player has participated, or the like (such as the remaining number of spots that the player has not reached and the position information of the spot).

### (Waiting Step)

After the rally start step, the rally provision unit 11EX in a state of waiting for the request for the check-in determination (S130).

### (Check-In Determination Step)

The rally player transmits the request for the check-in determination from the rally player terminal 40 via the rally player terminal 40 when reaching a target spot. In a case where the request for the check-in determination is received from the rally player terminal 40 (S140), the check-in determination unit 11CH reads the spot check-in condition associated with the spot ID, on the basis of the spot ID of the spot of included in the request for the check-in determination, with reference to the spot DB. After that, the check-in determination unit 11CH requests the rally player terminal 40 to transmit the check-in determined information. After the check-in determined information is received from the rally player terminal 40, the check-in determination unit 11CH determines whether the check-in determined information satisfies the spot check-in condition (S140).

### (Check-In History Update Step)

After the determination of the check-in determination unit 11CH, the check-in history management unit 11HS writes the request for the check-in determination, the check-in determined information, and the check-in determination result in the check-in history DB (S142).

### (Game Achievement Determination Step)

In a case where the valid check-in is determined by the check-in determination unit 11CH, the game achievement determination unit reads the game achievement condition from the game ID and the game version associated with the player ID. Further, the game achievement determination unit extracts various types of information associated with the player ID from the check-in history DB, and determines whether the extracted information satisfies the game achievement condition (S144). In a case where it is determined that the extracted information satisfies the game achievement condition, the player registration processing unit writes the game achievement information in the player DB. In addition, in a case where the valid check-in is not determined or in a case where it is determined that the extracted information does not satisfy the game achievement condition, the process transitions to the waiting step (S130) of waiting for the request for the check-in determination from the rally player terminal 40.

### (Game Achievement Benefit Giving Step)

In a case where it is determined that the game achievement condition is achieved, the benefit provision unit 11RW associates the game achievement benefit associated with the game achievement condition with the player ID, in the player DB, and transmits the fact that the game achievement benefit is given to the player to the rally player terminal 40 associated with the player ID (S146).

### (Series Achievement Determination Step)

When the game achievement determination unit determines that game achievement condition is satisfied, the series achievement determination unit reads the series achievement condition from the series DB, on the basis of the series ID associated with the game ID, and reads the game achievement information associated with the player ID from the player DB. Next, the series achievement determination unit determines whether the game achievement information satisfies the series achievement condition (S150). In a case where it is determined that the game achievement information satisfies the series achievement condition, the player registration processing unit writes the series achievement information in the player DB. In addition, in a case where it is determined that the game achievement information does not satisfy the series achievement condition, the rally management server 10 transitions to the waiting step (S130) of waiting for the request for the check-in determination from the rally player terminal 40.

### (Series Achievement Benefit Giving Step)

When it is determined that the series achievement condition is achieved, the benefit provision unit 11RW associates the series achievement benefit associated with the series achievement condition with the player ID, in the player DB, and transmits the fact that the series achievement benefit is given to the player to the rally player terminal 40 associated with the player ID (S152). After that, the rally management server 10 transitions to the waiting step (S130) of waiting for the request for the check-in determination from the rally player terminal 40.

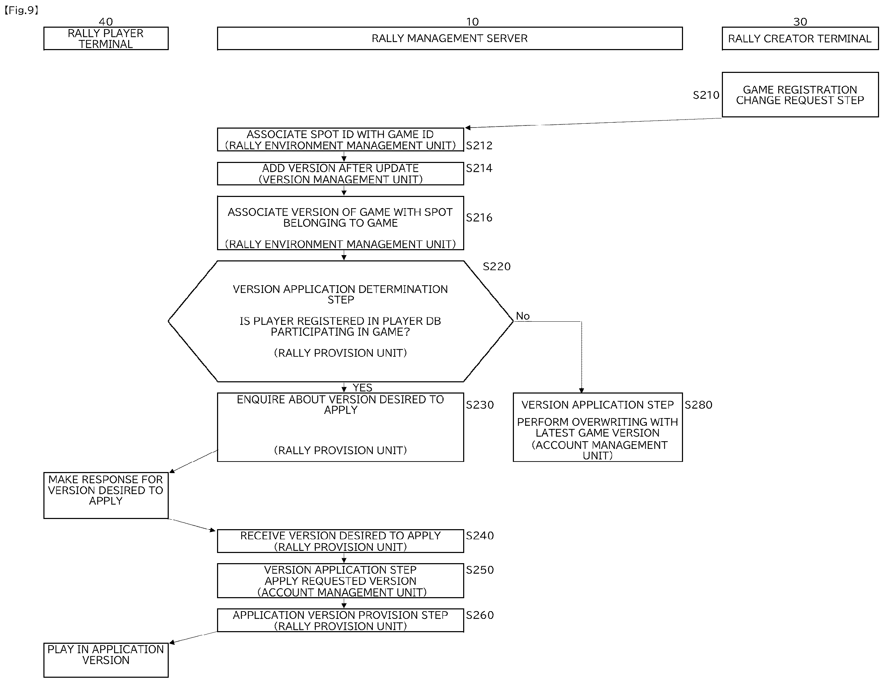

Next, a case where a new spot is installed will be described by using Fig. 9.

### (Game Registration Change Request Step)

The rally manager terminal 20 or the rally creator terminal 30 transmits a request for adding a new spot (a spot ID "SPOT008") in a predetermined game (Game ID: GAME001) via the manipulation of the terminal (S210).

When the request for adding the new spot (the spot ID "SPOT008") is received, the spot registration change unit adds the spot ID "SPOT008" to the spot DB (Fig. 5(A)), and associates the spot ID "SPOT008" with the game ID "GAME001" (S212).

Further, when the spot ID "SPOT008" is associated with the game ID "GAME001", the version management unit 11VR adds a game version "GAME001_02" after update as the game version of the game ID "GAME001", together with the previous game version "GAME001_01" (Fig. 5(B)) (S214).

After that, the spot registration change unit associates "GAME001_02" indicating a version "02" of "GAME001" with the spot ID "SPOT008", as the game version in the spot ID "SPOT008" (Fig. 5(A)). In addition, for the game version in the existing spot (spot IDs "SPOT001" to "SPOT007"), the spot registration change unit adds "GAME001_02" indicating the version "02" of the "GAME001" as the game versions of the spot IDs "SPOT001" to "SPOT007". Accordingly, the spot ID of the spot that is newly established is associated with the game version updated due to new establishment, and the spot ID of the existing spot is associated with the updated game version, in addition to the existing game version (S216).

As described above, the version management unit 11VR is capable of managing the contents of the game in which the addition of the spot is performed with the version.

### (Version Application Determination Step)

When the version of a predetermined game is upgraded, the rally provision unit 11EX determines whether the player ID registered in the player DB is the player participating in the game (S220).

The rally provision unit 11EX enquires of the rally player terminal 40 of the player who is determined to be participating in the game about the version desired to apply. In the enquiry about the version desired to apply, the rally management server 10 transmits information relevant to the version immediately before the update of the game and the version immediately after the update of the game to the rally player terminal 40, and enquires about which version the player desires to play (S230).

In a case where the rally management server 10 receives the request for the version of the game that is desired to apply from the rally player terminal 40 (S240), the player registration processing unit performs a version application step of associating the player ID according to the request with the game version according to the request, with reference to the player DB (S250). The rally provision unit 11EX provides the game of the requested version to the rally player terminal 40 (S260).

On the other hand, in S230, in the rally provision unit 11EX, the player registration processing unit performs a version application determination step of overwriting the participating game information of the game that is associated with the player ID with the latest game version on the rally player terminal 40 of the player determined not to be participating in the game, with reference to the player DB (S280). Accordingly, when the version is upgraded, for the player not participating in the game, the game of the latest version is provided when the participation is registered, and the game of the old version is not provided when the participation is registered. In other words, when the version is upgraded, only the player who is participating in the game is able to play the previous game version at the time of the version upgrade.

As described above, in the point rally management system 2, the game (the point rally) including the plurality of spots and the series including the plurality of games are set, each achievement condition is provided in each of the games and the series, and the achievement benefit according to each achievement condition is provided, and thus, the hurdle for the condition achievement is lowered, and the motivation of the participant is increased, compared to the case of performing one large-scale point rally including a massive number of spots. Therefore, the player is able to continuously perform the point rally, compared to the case of performing one large-scale point rally.

In addition, in the point rally management system 2, even in a case where the spot moves, disappears, or is newly established, such a change can be reflected on the game, and thus, it is possible to continuously perform the point rally for a long period of time, compared to the related art.

Further, every time when the spot moves, disappears, or is newly established, it is possible to perform the version management of the game to which the spot belongs. Therefore, not only the player who participated in the game before the version is upgraded, but also the player who participated in the game after the version is upgraded are able to perform the game. As a result, it is possible to continuously perform the point rally for a long period of time, compared to the related art.

In addition, when the version of the game is upgraded, only the player whose participation in the game is registered is able to play the game of the existing version at the time of the version upgrade. Therefore, a specific premium occurs for the player who is capable of playing the old version, and thus, the registration of the participation in the game is promoted.

Note that the game creator registration processing unit is also capable of recruiting the game creator from the players registered in the player DB. In a case where an application for the game creator is received from the rally player terminal 40, the game creator registration processing unit requests the rally player terminal 40 to transmit the information required for game creator registration, and updates the game creator DB (Fig. 4(A)), on the basis of the information transmitted from the rally player terminal 40.

Similarly, the player registration processing unit is capable of recruiting the player of the game from the creators registered in the creator DB. In a case where an application for the player is received from the rally creator terminal 30, the player registration processing unit requests the rally creator terminal 30 to transmit the information required for the player registration, and updates the player DB (Fig. 4(A)), on the basis of the information transmitted from the rally creator terminal 30.

As described above, the rally player can also be the rally creator, and the rally creator can also be the rally player, and thus, it is easy for the player who has played or the creator who has created to continue the activity in the point rally management system for a long period of time.

In addition, the ranking management unit 11RK also enables the rally player terminal 40 to have a vote on a favorite game or series, or to have a vote on a favorite creator. In addition, the ranking management unit 11RK tallies up the result of the vote, and performs ranking in order of the number of votes. Each number of votes or the ranking of each type of information is stored in association with the corresponding identifier such as the creator ID, the player IDB, or the spot ID, in the creator DB, the player DB, the spot DB, the game DB, or the series DB, and is transmitted to the rally player terminal 40 or the rally creator terminal 30.

Note that the ranking management unit 11RK may calculate the number of visits (such as the number of valid check-in determination or the number of players receiving the valid check-in determination) for each spot, with reference to the check-in history DB, and may tally up the ranking of the spot with a higher number of visits, under a predetermined condition. Ranking information obtained as described above is transmitted to the rally player terminal 40. Note that the ranking information may include not only the spot with a higher number of visits, but also the creator ID of the spot.

In addition, the ranking management unit 11RK may calculate the number of participants of the game, the number of plays of the game, the number of participants of the series, or the number of plays of the game, with reference to the game DB or the series DB, and may tally up the ranking relevant to the number of participants or the number of plays, under a predetermined condition. The ranking information obtained as described above is transmitted to the rally player terminal 40.

In the embodiment described above, the check-in determination step S140 to the series achievement benefit giving step S152 are performed by the rally management server 10 (refer to Fig. 8), but the invention is not limited thereto. The check-in determination step S140 to the series achievement benefit giving step S152 may be performed by the rally player terminal 40. A program for a server may be installed in the rally management server 10, and a program for a terminal may be installed in the rally player terminal 40.

Hereinafter, the same reference numerals will be applied to the same parts as that in the embodiment described above, and for the details thereof, only the different parts will be described, and the same parts will be omitted.

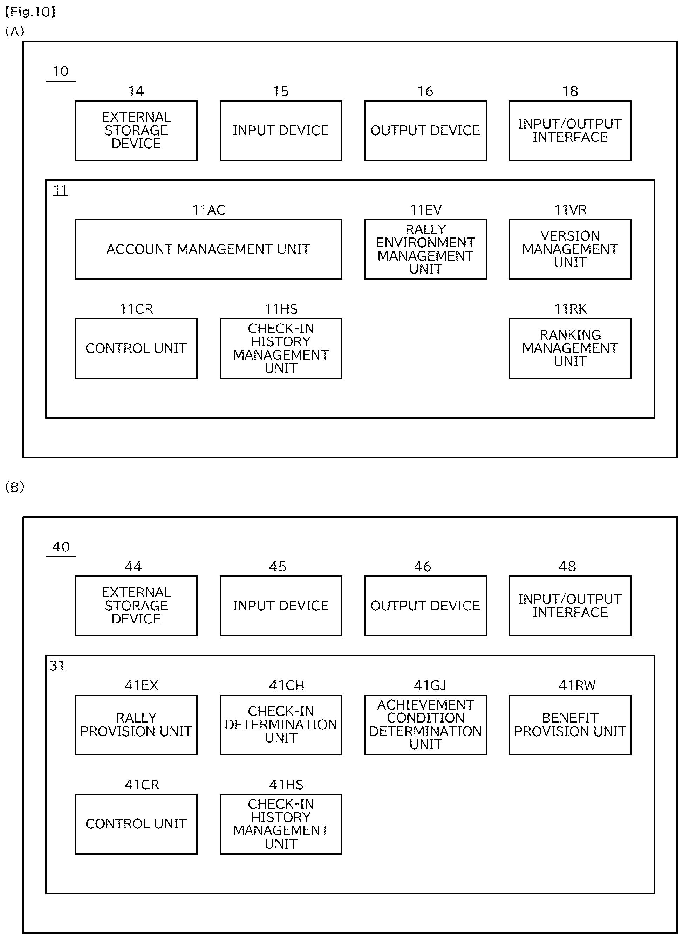

In the rally management server 10, in a case where the basic OS or the various programs (the program for a server of the point rally management program) stored in the ROM 13 are executed by the CPU 11, as illustrated in Fig. 10(A), the rally management server 10 functions as the external storage device 14, the input device 15, the output device 16, the input/output interface 18, the account management unit 11AC, the rally environment management unit 11EV, the version management unit 11VR, the check-in history management unit 11HS managing the check-in history, the ranking management unit 11RK, and the control unit 11CR controlling each device.

In the rally player terminal 40, in a case where the basic OS or the various programs (the program for a terminal of the point rally management program) stored in the ROM 43 are executed by the CPU 41, as illustrated in Fig. 10(B), the rally player terminal 40 functions as the external storage device 44, the input device 45, the output device 46, the input/output interface 48, a rally provision unit 41EX (a game provision unit) providing the point rally to each player, a check-in determination unit 41CH determining whether the player performs valid check-in at a predetermined spot, a check-in history management unit 41HS managing the check-in history, an achievement condition determination unit 41GJ determining whether to satisfy a predetermined achievement condition of a game in which the player participates, a benefit provision unit 41RW providing a predetermined benefit to the player who satisfies the achievement condition, a ranking management unit 41RK managing a ranking relevant to the point rally, and a control unit 41CR controlling each device.

Hereinafter, the same name will be applied to each unit of the rally player terminal 40 (Fig. 10(B)) that is same as each unit of the rally management server 10 (Fig. 10(A)), and the detailed description will be made only for different parts.

The check-in history management unit 41HS transmits update data to the rally management server 10. In a case where the rally management server 10 receives the update data, the check-in history management unit 11HS adds the update data received from the rally player terminal 40 to the check-in history DB (Fig. 7).

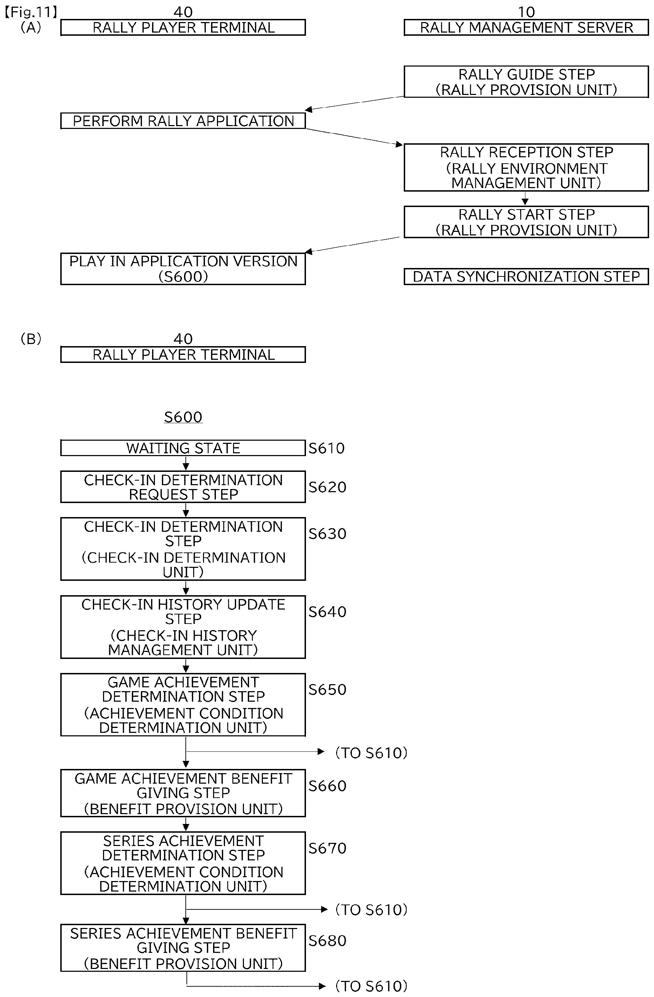

Next, the point rally management method using the point rally management system 2 will be described by using Fig. 10, 11.

### (Rally Guide Step)

In the rally management server 10, the rally provision unit 11EX transits a predetermined game or series to the rally player terminal 40, with reference to the game DB and the series DB (S510).

### (Rally Reception Step)

When the rally management server 10 receives the application request for participation in the game from the rally player terminal 40, the game registration change unit associates the information included in the application request for participation (for example, the game ID relevant to the game) with the player ID, in the game DB, and the player registration processing unit associates the participating game information or the game achievement information with the player ID, in the player DB (S512). Similarly, when the rally management server 10 receives the application request for participation in the series from the rally player terminal 40, the series registration change unit associates the information included in the application request for participation (for example, the series ID relevant to the series) with the player ID, in the series DB, and the player registration processing unit associates the series ID with the player ID, in the player DB (S512).

### (Rally Start Step)

After the rally reception step, the rally provision unit 11EX transmits various types of information relevant to the game or the series according to the application request for participation or various types of information required to play the rally to the rally player terminal 40, on the basis of the request from the rally player terminal 40, with reference to the player ID, the game DB, the series DB, or the check-in history DB (S520). The rally player plays the rally point while making a game plan for the next spot via the rally player terminal 40, with reference to the information relevant to the games in which the player has participated, or the like (such as the remaining number of spots that the player has not reached and the position information of the spot) (S600).

The control unit 41CR records various types of information gained by the rally player terminal 40 (such as the check-in history, the game achievement information, the series achievement information, and the gained point) in the external storage device 44. The control unit 41CR transmits various types of information stored in the external storage device 44 to the rally management server 10 at a predetermined timing. The control unit 11CR updates various types of information received from the rally player terminal 40 in the various DB of the external storage device 14. As described above, the various types of information gained by the rally player terminal 40 and the information stored in the rally management server 10 are synchronized (S525).

Next, a procedure of playing the rally point in the rally player terminal 40 will be described (Fig. 11(B)).

### (Waiting State)

The rally player terminal 40 in a waiting state waits for the input of the request for the check-in determination (S610).

### (Check-In Determination Request Step)

In a case where the player reaches the target spot, the manipulation of the request for the check-in determination is performed via the rally player terminal 40 (S620).

### (Check-In Determination Step)

The check-in determination unit 41CH reads the spot check-in condition associated with the spot ID, on the basis of the spot ID of the spot according to the request for the check-in determination. Further, the check-in determination unit 41CH requests the input of the check-in determined information via the output device of the rally player terminal 40. In a case where the check-in determined information is input by the manipulation of the rally player terminal 40 (for example, a manipulation of reading a two-dimensional code, or the like), the check-in determination unit 41CH determines whether the check-in determined information satisfies the spot check-in condition (S630).

### (Check-In History Update Step)

After the determination of the check-in determination unit 41CH, the check-in history management unit 41HS writes the request for the check-in determination, the check-in determined information, and the check-in determination result in the external storage device 44 (S640). Here, the check-in determination result is a determination result that the check-in determined information satisfies the spot check-in condition (valid check-in), or a determination result that the check-in determined information does not satisfy the spot check-in condition (invalid check-in).

### (Game Achievement Determination Step)

In a case where the valid check-in is determined by the check-in determination unit 41CH, the game achievement determination unit of the rally player terminal 40 reads the game achievement condition from the game ID and the game version associated with the player ID. Further, the game achievement determination unit of the rally player terminal 40 extracts various types of information associated with the player ID from the check-in history DB, and determines whether the extracted information satisfies the game achievement condition (S650). In a case where it is determined that the extracted information satisfies the game achievement condition, the control unit 41CR writes the game achievement information in the external storage device 44. In addition, in a case where the valid check-in is not determined, or in a case where it is determined that the extracted information does not satisfy the game achievement condition, the rally player terminal 40 transitions to the waiting state of waiting the request for the check-in determination.

### (Game Achievement Benefit Giving Step)

In a case where it is determined that the game achievement condition is achieved, the benefit provision unit 11RW associates the game achievement benefit associated with the game achievement condition with the player ID, in the external storage device 44, and the output device 46 displays the fact that the game achievement benefit is given to the player (S660).

### (Series Achievement Determination Step)

When the game achievement determination unit determines that the game achievement condition is satisfied, the series achievement determination unit reads the series achievement condition from the external storage device 44, on the basis of the series ID associated with the game ID, and reads the game achievement information associated with the player ID from the external storage device 44. Next, the series achievement determination unit determines whether the game achievement information satisfies the series achievement condition (S670). In a case where it is determined that the game achievement information satisfies the series achievement condition, the control unit 41CR writes the series achievement information in the external storage device 44. In addition, in a case where it is determined that the game achievement information does not satisfy the series achievement condition, the rally player terminal 40 transitions to the waiting state of waiting the input of the request for the check-in determination.

### (Series Achievement Benefit Giving Step)

When it is determined that the series achievement condition is achieved, the benefit provision unit 41RW associates the series achievement benefit associated with the series achievement condition with the player ID, in the external storage device 44, and the output device 46 displays the fact that the series achievement benefit is given to the player (S680). After that, the rally player terminal 40 transitions to the waiting state of waiting the input of the request for the check-in determination.

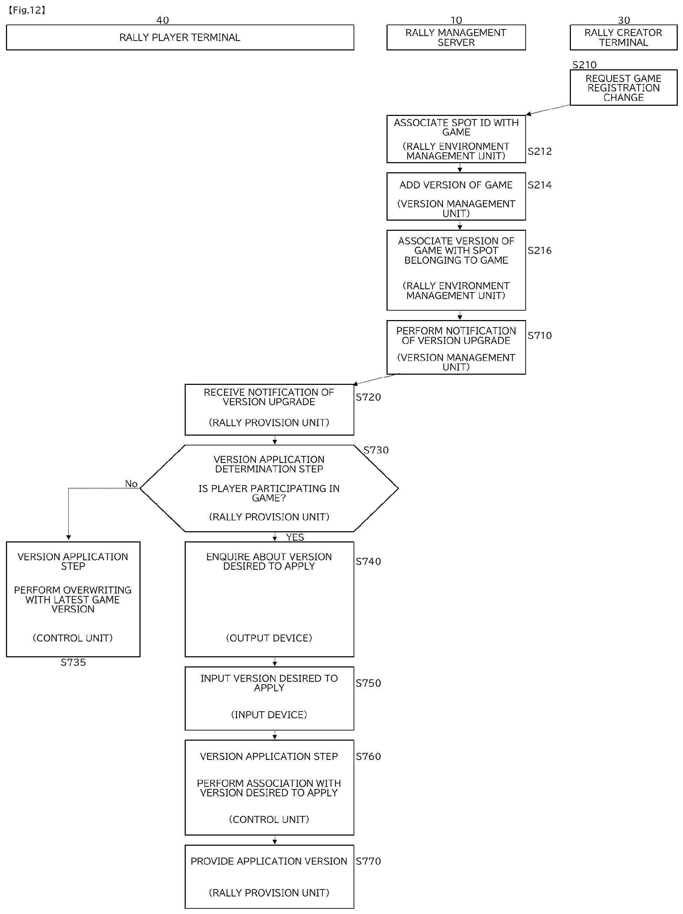

Next, a case where the version of the game is upgraded will be described by using Fig. 12.

### (Game Registration Change Request Step)

The rally manager terminal 20 or the rally creator terminal 30 transmits the request for adding the new spot (the spot ID "SPOT008") in the predetermined game (Game ID: GAME001) via the manipulation of the terminal (S210).

When the request for adding the new spot (the spot ID "SPOT008") is received, the spot registration change unit adds the spot ID "SPOT008" to the spot DB (Fig. 5(A)), and associates the spot ID "SPOT008" with the game ID "GAME001" (S212).

Further, when the spot ID "SPOT008" is associated with the game ID "GAME001", the version management unit 11VR adds the game version "GAME001_02" after update as the game version of the game ID "GAME001", together with the previous game version "GAME001_01" (Fig. 5(B)) (S214).

After that, the spot registration change unit associates "GAME001_02" indicating the version "02" of "GAME001" with the spot ID "SPOT008", as the game version in the spot ID "SPOT008" (Fig. 5(A)). In addition, for the game version in the existing spot (spot IDs "SPOT001" to "SPOT007"), the spot registration change unit adds "GAME001_02" indicating the version "02" of "GAME001" as the game versions of the spot IDs "SPOT001" to "SPOT007". Accordingly, the spot ID of the spot that is newly established is associated with the game version updated due to the new establishment, and the spot ID of the existing spot is associated with the updated game version, in addition to the existing game version (S216).

After that, the version management unit 11VR notifies the rally play terminal 40 of the player ID registered in the player DB that the version is upgraded in the predetermined game (S710).

In a case where the rally play terminal 40 receives the notification of the version upgrade from the rally management server 10 (S720), the rally provision unit 41EX performs the version application determination step of comparing the game ID included in the notification of the version upgrade with the game ID associated with the player ID stored in the external storage device 44, and determining whether the player participates in the game of which the version is upgraded (S730).

In a case where it is determined that the player does not participate in the game of which the version is upgraded, the control unit 41CR overwrites the game version of the game ID stored in the external storage device 44 with the game version after update (S735). After that, the control unit 41CR requests various types of information required to play the rally of the game version after update from the rally management server 10, and stores the various types of information received from the rally management server 10 in the external storage device 44. On the other hand, in a case where it is determined that the player participates in the game of which the version is upgraded, a selection request screen for the version of the game immediately before the update and the version of the game immediately after the update is displayed on the output device 46 (S740). Accordingly, it is possible to enquire of the player about which play of the existing version and the new version of the game the player desires to apply.

In a case where the input of the version of the game that is desired to apply is received via the manipulation of the input device 45 (S750), the control unit 41CR performs the version application step of associating the player ID with the game version desired to apply, with reference to the external storage device 44 (S760). After that, the control unit 41CR requests the various types of information required to play the rally of the game version after update from the rally management server 10, and stores the various types of information received from the rally management server 10 in the external storage device 44. The rally provision unit 41EX provides the game of the requested version to the rally player (S770).

In the embodiment described above, in the version application step, the player ID is associated with the game version that the player desires to apply, but the invention is not limited thereto, and the game version after update may be added as the game version associated with the player ID, regardless of whether the player desires to apply the version. Further, after that, a version application reselection step of receiving a request for selecting the application version from the player may be performed after the version application step. It is preferable that the version application reselection step is performed in accordance with the request of the player. When the version is upgrade to the second version by the version application reselection step, even the player who selects the first version is able to play the game of the second version by performing the version application reselection step in accordance with the request of the player after achieving the game of the first version.

In the embodiment described above, the rally guide step (S510) is performed by the rally management server 10, the rally application is performed by the rally player terminal 40, and the rally reception step (S512) and the rally start step (S520) are performed by the rally management server 10, but the invention is not limited thereto. A predetermined server (such as the rally management server 10) may be requested to download the program for a terminal of the point rally management program, and the rally reception step (S512) and the rally start step (S520) may be performed in the process of installing the program for a terminal.

In the embodiment described above, the contents of the game in which the addition of the spot is performed is managed with the version, but the invention is not limited thereto, and the contents of the game in which the spot is deleted or changed may be managed with the version.

When a request for deleting the existing spot in the predetermined game is received from the rally manager terminal 20 or the rally creator terminal 30, the version management unit 11VR adds the game version after update (for example, "GAME00X_01" is updated to "GAME00X_02") as the game version of the game ID associated with the spot. In this case, the spot registration change unit adds the version after the version upgrade to all the spot IDs belonging to the game after deletion, as the game version.

When a request for changing the existing spot in the predetermined game is received from the rally manager terminal 20 or the rally creator terminal 30, the version management unit 11VR adds the game version after update as the game version of the game ID associated with the spot. In this case, the spot registration change unit adds the version after the version upgrade to all the spot IDs belonging to the game, as the game version.

As described above, the version management unit 11VR is capable of managing the contents of the game in which the addition, the change, or the deletion of the spot is performed with the version.

Note that "it is not possible to satisfy the check-in condition of the spot due to the disappearance or the movement of the spot" may be transmitted from the rally player terminal 40. In this case, when "it is not possible to satisfy the check-in condition of the spot due to the disappearance or the movement of the spot" is received from the rally player terminal 40, the rally provision unit 11EX may request the rally manager terminal 20 to check the site of the spot. Then, as a result of checking the site, in a case where "it is not possible to satisfy the check-in condition of the spot due to the disappearance or the movement of the spot" is correct, predetermined version upgrade processing may be performed, and a predetermined point may be given to the player ID associated with the rally player terminal 40 from which the information is provided.

Further, in a case where the spot belonging to the game disappears or moves, and the spot check-in condition of the spot is "acquiring the predetermined two-dimensional code" even when using the game version before update, it is not possible to satisfy the spot check-in condition thereafter. In such a case, it is preferable that the spot registration change unit changes the spot check-in condition of the spot relevant to the game version before update to a condition that can be determined on the basis of the spot position information of the spot (for example, "the position information transmitted from the rally player terminal 40 is within the radius r meters from the spot position information").

In the embodiment described above, in a case where the addition, the change, or the deletion of the spot that is the constituent of the game is performed, the version of the game is updated, but the invention is not limited thereto, and the game version may be updated when the game achievement condition or the game achievement benefit is changed. In this case, the game achievement condition or the game achievement benefit is associated with the game version in the game DB, and when the game version is updated, the game version after update may be added as the game version associated with the game achievement condition or the game achievement benefit, in addition to the game version before update, and the game version before update is updated to the game version after update.

For example, in a case where the game achievement condition of the game is "checking in all the spots belonging to the game", the game achievement condition may remain the same before and after the version upgrade of the game. On the other hand, the game achievement condition of the game may be individually changed before and after the version upgrade of the game from "checking in all the spots belonging to the game" to "checking in all the spots belonging to the game during a predetermined period" or "checking in all the spots belonging to the game, and then, answering a predetermined quiz". In such a case, the game registration change unit stores the game ID in association with each game achievement condition and each game version, in the game DB, at a version upgrade timing.

In the embodiment described above, in a case where the movement, the deletion, the addition, or the like of the spot occurs, the version of the game belonging to the spot is updated, but the invention is not limited thereto, and the version of the series belonging to the game may be updated together with the version of the game belonging to the spot.

In addition, a major series to which a plurality of series belong may be set, and the major series may be played together with the game and the series.

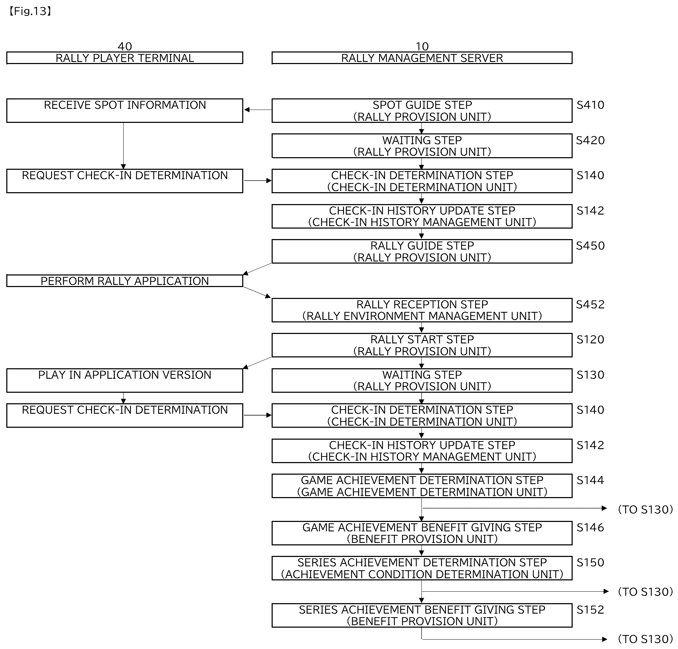

In the embodiment described above, when the player participating in the predetermined game reaches the predetermined spot, the check-in history update step (S142) and the game achievement determination step (S144) are performed as a result of the check-in determination step (S140 in Fig. 8), but the invention is not limited thereto, and the check-in determination step (S140 in Fig. 8) or the check-in history update step (S142) may be performed when the player not participating in the game (the player ID that is not associated with the game ID) checks in the predetermined spot. In this case, for the point rally management method using the point rally management system 2 will be described by using Fig. 13.

### (Spot Guide Step)

The rally provision unit 11EX transmits various types of information relevant to the spot ID registered in the spot DB (Fig. 10(A)) (such as the spot name, the spot location, and the spot position information) to "a player with a player ID of PL_0106 or PL_0107") in the player registered in the player DB (for example, Fig. 4(B) (S410).

### (Waiting Step)

After the spot guide step, the rally provision unit 11EX is in a state of waiting for the request for the check-in determination (S420).

### (Check-In Determination Step)

In a case where the player reaches the target spot, the request for the check-in determination is transmitted from the rally player terminal 40 via the rally player terminal 40. In a case where the request for the check-in determination is received from the rally player terminal 40 (S140), the check-in determination unit 11CH reads the spot check-in condition associated with the spot ID, on the basis of the spot ID of the spot included in the request for the check-in determination, with reference to the spot DB. After that, the check-in determination unit 11CH requests the rally player terminal 40 to transmit the check-in determined information. After the check-in determined information is received from the rally player terminal 40, the check-in determination unit 11CH determines whether the check-in determined information satisfies the spot check-in condition (S140).

### (Check-In History Update Step)

After the determination of the check-in determination unit 11CH, the check-in history management unit 11HS writes the request for the check-in determination, the check-in determined information, and the check-in determination result in the check-in history DB (S142).

### (Rally Guide Step)

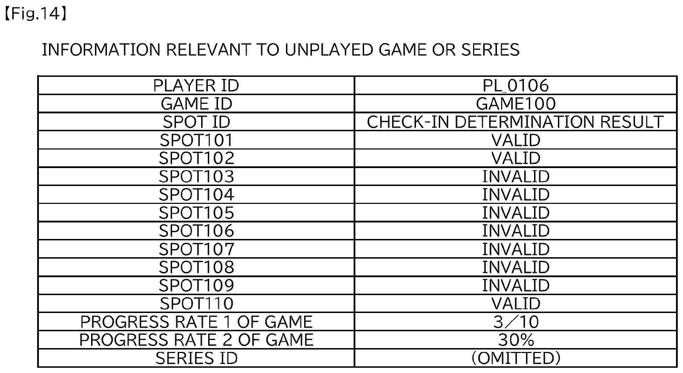

The rally provision unit 11EX transmits the information relevant to the game or the series in which the player has not participated to the rally player terminal 40, with reference to the game DB and the series DB (S450). The information relevant to the unplayed game or series includes an unplayed game ID associated with a player ID, a spot ID associated with the unplayed game ID, a series ID associated with the unplayed game ID, and the like. Further, the information relevant to the unplayed game or the like may include a check-in determination result associated with the player ID and the spot ID, and a progress rate of the game (Fig. 14).

In a case where the number of spot IDs associated with the game ID is set as N, and the number of spot IDs with the valid check-in determination result among the spot IDs associated with the game ID is set as M, the progress rate of the game may be displayed as "M/N", or may be displayed as "M/N × 100". In addition, the check-in determination result relevant to the spot ID associated with the game ID may be displayed as a table.

### (Rally Reception Step)

When the rally management server 10 receives the application request for participation of the game from the rally player terminal 40, the game registration change unit associates included the information in the application request for participation (for example, the game ID relevant to the game) with the player ID, in the game DB, and the player registration processing unit associates the participating game information or the game achievement information with the player ID, in the player DB (S452). Similarly, when the rally management server 10 receives the application request for participation of the series from the rally player terminal 40, the series registration change unit associates the information included in the application request for participation (for example, the series ID relevant to the series) with the player ID, in the series DB, and the player registration processing unit associates the series ID with the player ID, in the player DB.

After the rally start step, the rally start step S120 to the series achievement benefit giving step S152 illustrated in Fig. 8 may be suitably performed. Then, in the game achievement determination step S144 or the series achievement determination step S150, not only the check-in determination result generated after being associated with the game ID, but also the check-in determination result generated before being associated with the game ID can be used.

That is, in the game achievement determination step S144, the game achievement determination unit reads the player ID, the spot ID, and the like from the information relevant to the check-in, and then, whether to satisfy the achievement condition of the game is determined by using not only the check-in history generated later than the game participation time associated with the player ID, but also the check-in history generated earlier than the game participation time associated with the player ID.

In addition, in the series achievement determination step S150, the series achievement determination unit reads the player ID, the spot ID, and the like from the information relevant to the check-in, and then, whether to satisfy the achievement condition of the series is determined by using not only the check-in history generated later than the game participation time associated with the player ID, but also the check-in history generated earlier than the game participation time associated with the player ID.

As described above, by performing the spot guide step S410, the waiting step S420, the check-in determination step S140, and the check-in history update step S142 even when the player not participating in the game checks in the predetermined spot, when the player participates in the game in the future, the check-in determination result obtained before participating in the game can be used in the achievement condition of the game. Further, for the player who has not participated in the game, an incentive for enabling the check-in even when not participating in the game is created in consideration of the benefit obtained when participating in the game in the future.

In addition, the rally provision unit 11EX transmits the information relevant to the game or the series in which the player has not participated to the rally player terminal 40, with reference to the game DB and the series DB. The information relevant to the unplayed game or series includes the unplayed game ID associated with the player ID, the spot ID associated with the unplayed game ID, and the progress rate of the game, and thus, the player is capable of grasping the progress rate of the game before participating in the game. As a result, the player is able to determine whether to participate in the game. In addition, an incentive for the player to participate in the game is also created.

In this embodiment, the check-in history includes the check-in time (Fig. 7). In addition, the player ID is associated with the game participation time representing a time when the player participates in the game for each game ID (Fig. 4(B)). Therefore, the game achievement determination unit compares the check-in time with the game participation time, in a case where the check-in time is earlier than the game participation time, the check-in history can be determined as the check-in history before being registered in association with the game ID, and in a case where the check-in time is later than the game participation time, the check-in history can be determined as the check-in history after being registered in association with the game ID.

Therefore, in the determination performed by the game achievement determination unit, a mode using only the check-in determination result obtained by the player after participating in the game or the series, and a mode using not only the check-in determination result obtained by the player after participating in the game or the series but also the check-in determination result obtained by the player before participating in the game or the series can be set for each game. Such setting is performed by the game registration change unit of the rally environment management unit 11EV. Then, the game achievement determination unit may perform the determination in accordance with the set mode among two modes described above.

Note that the invention is not limited to the embodiment described above, and it is obvious that various modifications can be added within a range not departing from the gist of the invention.

### EXPLANATIONS OF LETTERS OR NUMERALS

- 2: POINT RALLY MANAGEMENT SYSTEM

- 10: RALLY MANAGEMENT SERVER
- 11AC: ACCOUNT MANAGEMENT UNIT
- 11CH: CHECK-IN DETERMINATION UNIT
- 11CR: CONTROL UNIT
- 11EV: RALLY ENVIRONMENT MANAGEMENT UNIT
- 11EX: RALLY PROVISION UNIT
- 11GJ: ACHIEVEMENT CONDITION DETERMINATION UNIT
- 11HS: CHECK-IN HISTORY MANAGEMENT UNIT
- 11RK: RANKING MANAGEMENT UNIT
- 11RW: BENEFIT PROVISION UNIT
- 11VR: VERSION MANAGEMENT UNIT
- 14: EXTERNAL STORAGE DEVICE
- 15: INPUT DEVICE
- 16: OUTPUT DEVICE
- 18: INPUT/OUTPUT INTERFACE
- 20: RALLY MANAGER TERMINAL
- 40: RALLY PLAYER TERMINAL
- 50: COMMUNICATION LINE

## Claims

1. A point rally management program causing a computer to execute:
when defining identification information of a player as a player ID, identification information of a spot as a spot ID, a history that the player checks in the spot as a check-in history, identification information of a game including a plurality of the spots as a game ID, and identification information of a series including a plurality of the games as a series ID,
a check-in determination step of determining whether check-in determined information associated with the player ID and the spot ID satisfies a check-in condition of the spot ID;
a check-in history storage step of storing the check-in history associated with the player ID and the spot ID in a storage device when the check-in determination step is performed;
a game achievement determination step of determining whether the check-in history stored in the storage device satisfies a predetermined game achievement condition; and
a series achievement determination step of reading an achievement determination result of the game by the game achievement determination step from the storage device and determining whether the check-in history associated with the series ID associated with the game ID satisfies a predetermined series achievement condition.

2. The point rally management program according to claim 1,
wherein the game ID is associated with a creator ID indicating a creator of the game, and
the program causes the computer to further execute:
a calculation step of reading the check-in history information from the storage device and calculating the number of check-ins of the spot, the number of players who have performed the check-in, the number of plays of the game, or the number of people playing the game; and
a ranking display step of giving a result of the calculation to the spot ID or the game ID to be stored in the storage device and displaying a ranking of the creator ID relevant to the result of the calculation.

3. The point rally management program according to claim 1 or 2,
wherein the player ID in the check-in determination step is associated with the game ID, and
in the game achievement determination step, the determination is performed on the basis of the check-in history after the player ID is associated with the game ID and the check-in history before the player ID is associated with the game ID.

4. The point rally management program according to claim 1 or 2, causing the computer to further execute,
when defining a version of the game as a game version,
a version application step of associating the game version that is updated with the player ID in the storage device,
wherein when the game version of the game is updated, in the version application step, the game version associated with the player ID not participating in the game is overwritten with the game version after update, and
in the game version associated with the player ID participating in the game, at least one of the game version before update and the game version after update is associated with the player ID, on the basis of a request of the player.

5. A point rally management program causing a computer to execute:
when defining identification information of a player as a player ID, identification information of a spot as a spot ID, a history that the player checks in the spot as a check-in history, and identification information of a game including a plurality of the spots as a game ID,
a check-in determination step of determining whether check-in determined information associated with the player ID and the spot ID satisfies a check-in condition of the spot ID;
a check-in history storage step of storing the check-in history associated with the player ID and the spot ID in a storage device when the check-in determination step is performed; and
a game achievement determination step of determining whether the check-in history that is stored in the storage device and is associated with the game ID and the player ID satisfies a predetermined game achievement condition,
wherein the player ID in the check-in determination step is not associated with the game ID, and
in the game achievement determination step, the determination is performed on the basis of the check-in history after the player ID is associated with the game ID and the check-in history before the player ID is associated with the game ID.

6. The point rally management program according to claim 3 or 5, causing the computer to further execute,
when registering the game in the storage device, a past check-in history application determination step of receiving whether to set the check-in history relevant to the player ID before being registered in association with the game ID as a determination target of the game achievement determination step for the game ID,
wherein the check-in history includes a check-in time,
in the player ID, a game participation time representing a time when the player participates in the game is associated with each of the game IDs,
when the check-in time is earlier than the game participation time, the check-in history is the check-in history before being registered in association with the game ID, and
when the check-in time is later than the game participation time, the check-in history is the check-in history after being registered in association with the game ID.

7. The point rally management program according to claim 6, causing the computer to further execute,
when guiding the player not participating in the game to the game,
a guide step of displaying a degree of progress of the game from the check-in history and the game achievement condition of the game,
wherein the degree of progress of the game is generated on the basis of the check-in history of the player stored in the storage device before the game is registered.

8. A point rally management program causing a computer to execute,
when defining identification information of a player as a player ID, identification information of a spot as a spot ID, a history that the player checks in the spot as a check-in history, identification information of a game including a plurality of the spots as a game ID, and a version of the game as a game version,
a version application step of associating the game version that is updated with the player ID in a storage device,
wherein when the game version of the game is updated, in the version application step, the game version associated with the player ID not participating in the game is overwritten with the game version after update, and
in the game version associated with the player ID participating in the game, at least one of the game version before update and the game version after update is associated with the player ID, on the basis of a request of the player.

9. The point rally management program according to claim 8,
wherein in the version application step, the game version after update is added as the game version associated with the player ID participating in the game.

10. The point rally management program according to claim 8,
wherein in the version application step, the game version associated with the player ID participating in the game is updated to the game version according to the request of the player, among at least one of the game version before update and the game version after update.

11. The point rally management program according to any one of claims 8 to 10, causing the computer to further execute,
when the game version of the game is updated,
an application version determination step of determining whether the player participates in the game.

12. The point rally management program according to claim 11,
wherein when the game version of the game is updated,
in the version application step, an instruction to select any one of the game version after update and the game version before update is output to the player who participated in the game before the game version of the game is updated.

13. The point rally management program according to any one of claims 8 to 10, causing the computer to further execute
a version association step of associating the game version that is updated with the game ID in the storage device,
wherein when the game version of the game is updated, and the game version associated with the game ID is added,
in the version association step, a game achievement condition associated with the game ID is added in accordance with the added game version.

14. The point rally management program according to claim 13,
wherein in the version association step, when any one of deletion, change, and addition of the spot belonging to the game is performed, the game version after update is added to the spot ID of the spot belonging to the game.

15. The point rally management program according to claim 14,
wherein when the deletion or the change of the spot is performed, a check-in determination condition of the spot relevant to the game version before update is set to position information of the spot ID that is deleted or position information of the spot ID before change.

16. A point rally management system, comprising:
a storage device storing identification information of a player as a player ID, identification information of a spot as a spot ID, a history that the player checks in the spot as a check-in history, identification information of a game including a plurality of the spots as a game ID, and identification information of a series including a plurality of the games as a series ID;
a check-in determination unit determining whether check-in determined information associated with the player ID and the spot ID satisfies a check-in condition of the spot ID;
a check-in history storage unit storing the check-in history associated with the player ID and the spot ID in the storage device;
a game achievement determination step of determining whether the check-in history stored in the storage device satisfies a predetermined game achievement condition; and
a series achievement determination unit reading an achievement determination result of the game by the game achievement determination unit from the storage device and determining whether the check-in history associated with the series ID associated with the game ID satisfies a predetermined series achievement condition.

17. A point rally management system, comprising:
a storage device storing identification information of a player as a player ID, identification information of a spot as a spot ID, a history that the player checks in the spot as a check-in history, and identification information of a game including a plurality of the spots as a game ID;
a check-in determination unit determining whether check-in determined information associated with the player ID and the spot ID satisfies a check-in condition of the spot ID;
a check-in history storage unit storing the check-in history associated with the player ID and the spot ID in the storage device; and
a game achievement determination unit determining whether the check-in history that is stored in the storage device and is associated with the game ID and the player ID satisfies a predetermined game achievement condition,
wherein the player ID to be a determination target of the check-in determination unit includes a player ID that is not associated with the game ID, and
the game achievement determination unit performs the determination, on the basis of the check-in history after the player ID is associated with the game ID and the check-in history before the player ID is associated with the game ID.

18. A point rally management system, comprising:
a storage device storing a player ID that is identification information of a player, a spot ID that is identification information of a spot, a check-in history that is a history that the player checks in the spot, a game ID that is identification information of a game including a plurality of the spots, and a game version that is a version of the game; and
a version application unit associating the game version that is updated with the player ID in the storage device,
wherein when the game version of the game is updated, the version application unit overwrites the game version associated with the player ID not participating in the game of the game version after update, and associates at least one of the game version before update and the game version after update with the player ID, on the basis of a request of the player, in the game version associated with the player ID participating in the game.
